# FASCICULE DE BREVET EUROPEEN

(11) **EP 3 469 805 B1**
(45) Date de publication et mention de la délivrance du brevet: **18.03.2020**
(21) Numéro de dépôt: 17728581.4
(22) Date de dépôt: 12.06.2017
(51) Int. Cl.: H04Q 9/00, B64D 45/00

(54) **SYSTÈME DE SURVEILLANCE D'UN ÉQUIPEMENT D'AÉRONEF**
SYSTEM ZUR ÜBERWACHUNG EINER FLUGZEUGVORRICHTUNG
SYSTEM FOR MONITORING AN AIRCRAFT DEVICE

(30) Priorité: 13.06.2016 FR 1655462
(43) Date de publication de la demande: 17.04.2019
(73) Titulaire: Safran Electronics & Defense, 92100 Boulogne-Billancourt (FR); Safran Nacelles, 76700 Gonfreville-l'Orcher (FR)
(72) Inventeur: FANTON, Nicolas, 92100 Boulogne Billancourt (FR); TINE, Pierre-Jean, 92100 Boulogne Billancourt (FR); NOUCHI, Sébastien, 76700 Gonfreville-l'Orcher (FR)
(74) Mandataire: Lavaud, Thomas
(86) Numéro de dépôt international: PCT/EP2017/064318
(87) Numéro de publication internationale: WO 2017/216119

(56) Documents cités:
- WO-A1-2013/184894
- WO-A2-2013/131072

## Description

L'invention concerne le domaine de la surveillance d'équipement d'aéronef (d'une nacelle de moteur par exemple).

### ARRIERE PLAN DE L'INVENTION

De nombreux équipements d'aéronef sont soumis à des contraintes environnementales importantes : température, pression, vibrations, chocs, perturbations électromagnétiques, etc.

La plupart de ces équipements d'aéronef sont surveillés en permanence grâce à des capteurs qui mesurent des paramètres représentatifs de l'état de ces équipements dans le but, d'une part, de détecter la survenue d'un défaut ou d'une panne et, d'autre part, de détecter une évolution anormale d'un paramètre pour anticiper une telle panne ou un tel défaut.

Cependant, certains équipements, tels que les nacelles de moteur par exemple, ne sont pas équipés (ou ne sont que partiellement équipés) de tels capteurs, car l'intégration de ces capteurs soulève un certain nombre de difficultés.

Or, les nacelles de moteur sont fortement sollicitées au cours de certaines phases de vol. Une nacelle subit en particulier des variations de température et des niveaux de vibration importants au cours des phases de décollage et de montée de l'aéronef, et des variations de pression importantes au cours des phases de descente, d'approche et d'atterrissage de l'aéronef. Ces températures, vibrations et pressions contraignent la nacelle, accélèrent son vieillissement et peuvent créer des défauts mécaniques dans la structure de la nacelle.

Actuellement, la détection de tels défauts mécaniques est réalisée par des inspections visuelles au cours des opérations de maintenance. Cependant, entre chaque inspection visuelle, un ou plusieurs défauts mécaniques peuvent apparaître ou s'aggraver. L'état de la nacelle nécessite alors soit une réparation importante de la nacelle, soit le remplacement de la nacelle.

Il a bien sûr été envisagé d'équiper la nacelle de capteurs de température, d'accélération et de pression, pour mieux détecter et anticiper l'apparition de tels défauts mécaniques, et pour mieux comprendre l'origine et les causes de la survenue de ces défauts mécaniques. Cependant, l'intégration sur la nacelle de ces capteurs et plus particulièrement leur connexion au réseau avionique ont été jugées trop complexes à mettre en œuvre.

La publication WO2013/184894 décrit un exemple d'utilisation de capteurs associés à un moteur d'avion, afin de contrôler son bon fonctionnement en vol.

### OBJET DE L'INVENTION

L'invention a pour objet de réduire la complexité de l'intégration d'un système de surveillance à un équipement d'aéronef, tel qu'une nacelle de moteur.

### RESUME DE L'INVENTION

En vue de la réalisation de ce but, on propose un système de surveillance d'un équipement d'aéronef, comprenant un module électronique maître et un module électronique esclave équipés chacun de premiers moyens de communication sans fil pour communiquer entre eux, le module électronique esclave comprenant en outre des moyens de mesure comportant un capteur et destinés à effectuer des mesures d'un paramètre de l'équipement d'aéronef, et des moyens d'alimentation rendant le module électronique esclave autonome énergétiquement, le module électronique maître comprenant en outre des moyens de détection adaptés à détecter une phase de vol dans laquelle se trouve l'aéronef, et des moyens de commande pour commander les moyens de mesure du module électronique esclave via les premiers moyens de communication sans fil pour adapter à la phase de vol détectée les mesures effectuées par les moyens de mesure.

Le module électronique maître et le module électronique esclave communiquent via les premiers moyens de communication sans fil. Aucune connexion filaire destinée à la communication ne relie donc le module électronique maître et le module électronique esclave, ce qui réduit la complexité de l'intégration sur l'équipement d'aéronef du système de surveillance selon l'invention. Le module électronique esclave est commandé par le module électronique maître via les premiers moyens de communication sans fil. La commande du module électronique esclave ne nécessite donc pas de connecter le module électronique esclave au réseau avionique.

De même, les moyens d'alimentation du module électronique esclave rendent le module électronique esclave autonome énergétiquement : il n'est donc pas nécessaire de connecter le module électronique esclave au réseau avionique pour son alimentation.

On note enfin que l'adaptation à la phase de vol des mesures effectuées par les moyens de mesure permet notamment de réduire la fréquence d'échantillonnage du capteur du module électronique esclave lorsque la phase de vol en question ne nécessite pas des mesures à une fréquence élevée, ce qui permet de réduire la consommation électrique du module électronique esclave et donc d'augmenter la durée de son autonomie.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
- la figure 1 représente un module électronique d'un système de surveillance selon l'invention ;
- la figure 2 représente schématiquement le fonctionnement du système de surveillance selon l'invention.

### DESCRIPTION DETAILLEE DE L'INVENTION

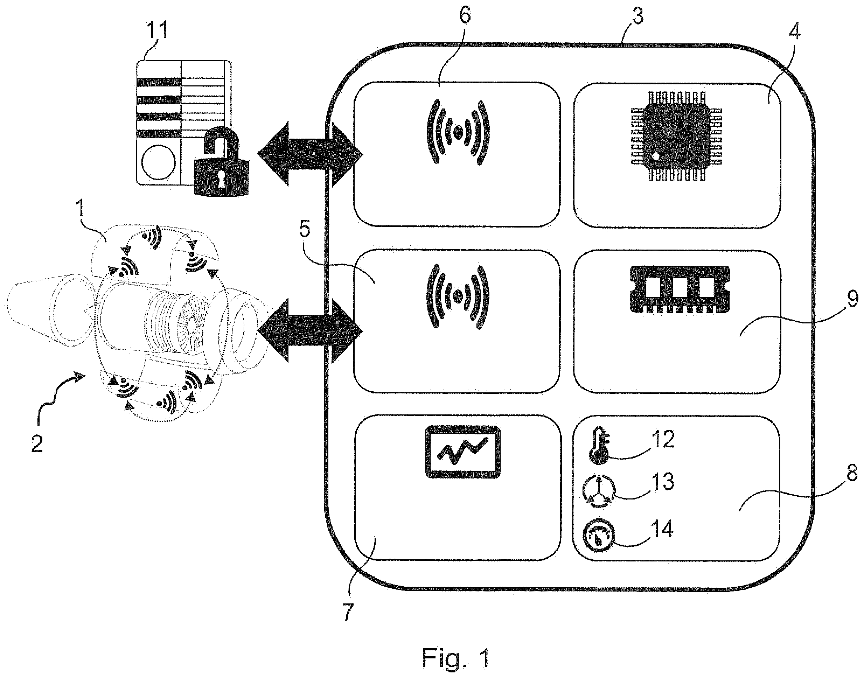

En référence à la figure 1, le système de surveillance selon l'invention est ici destiné à surveiller une nacelle 1 d'un moteur 2 d'aéronef.

Le système de surveillance selon l'invention comporte des modules électroniques 3 répartis sur la structure de la nacelle 1. Les modules électroniques 3 comprennent un module électronique maître et une pluralité de modules électroniques esclaves.

Ici, chaque module électronique 3 (maître ou esclave) est identique d'un point de vue « matériel » (ou *hardware,* en anglais), c'est à dire que chaque module électronique 3, qu'il soit maître ou esclave, comporte les mêmes composants électriques. Le module électronique maître et les modules électroniques esclaves diffèrent par un logiciel programmé dans un microcontrôleur 4 de chacun de ces modules électroniques 3. Ainsi, le module électronique maître comporte un microcontrôleur 4 dans lequel est programmé un logiciel lui permettant de réaliser des fonctions propres à un module électronique maître, et chaque module électronique esclave comporte un microcontrôleur 4 dans lequel est programmé un logiciel lui permettant de réaliser des fonctions propres à un module électronique esclave.

Outre le microcontrôleur 4, chaque module électronique 3 comporte des premiers moyens de communication sans fil 5, des deuxièmes moyens de communication sans fil 6, un module d'alimentation 7, des moyens de mesure 8 et une mémoire 9.

Les premiers moyens de communication sans fil 5 comprennent une antenne et un émetteur/récepteur radiofréquence. Les premiers moyens de communication sans fil 5 permettent au module électronique maître de communiquer avec chaque module électronique esclave grâce à une communication radiofréquence. Les premiers moyens de communication sans fil 5 utilisent ici un protocole de communication propriétaire à une fréquence et une puissance compatibles des problématiques de certification. La fréquence utilisée est ici égale à 2,4GHz.

Les deuxièmes moyens de communication sans fil 6 comprennent eux-aussi une antenne et un émetteur/récepteur radiofréquence. Les deuxièmes moyens de communication sans fil 6 ne sont ici utilisés que par le module électronique maître (et sont donc désactivés sur les modules électroniques esclaves). Les deuxièmes moyens de communication sans fil 6 permettent au module électronique maître de transmettre diverses données à un terminal récepteur au sol 11, situé à l'extérieur de l'aéronef dans la zone aéroportuaire. Le système de surveillance selon l'invention forme avec le terminal récepteur au sol 11 un réseau LPWAN (pour *Low-Power Wide-Area Network,* en anglais) utilisant une technologie conçue pour le domaine de l'internet des objets (ou IoT pour *Internet of Things,* en anglais). La technologie ici utilisée est une technologie de type bande étroite (ou *Narrow Band,* en anglais) ou de type bande ultra étroite (ou UNB de l'anglais *Ultra Narrow Band*). Les deuxièmes moyens de communication sans fil 6 opèrent à une fréquence adaptée aux réglementations locales. La fréquence utilisée est ici égale à 2,4GHz. Grâce à la mise en œuvre du réseau LPWAN, les deuxièmes moyens de communication sans fil 6 présentent une consommation d'énergie relativement faible et émettent une énergie radiofréquence relativement faible. Le débit des communications est lui aussi relativement faible, ce qui n'est pas problématique car il n'est pas nécessaire que les communications entre le module électronique maître et le terminal récepteur au sol 11 soient particulièrement rapides.

Les premiers moyens de communication sans fil 5 et les deuxièmes moyens de communication sans fil 6 sont compatibles avec l'ensemble des normes internationales relatives à l'utilisation des radiofréquences.

Les premiers moyens de communication sans fil 5 et les deuxièmes moyens de communication sans fil 6 sont notamment dimensionnés pour communiquer en utilisant une puissance limitée pour ne pas perturber les autres équipements de l'aéronef et les équipements au sol. Les premiers moyens de communication sans fil 5 et les deuxièmes moyens de communication sans fil 6 sont notamment compatibles avec la norme RTCA DO-160, et en particulier avec la section 21 qui traite de l'émission d'énergie radiofréquence.

Les premiers moyens de communication sans fil 5 et les deuxièmes moyens de communication sans fil 6 sont par ailleurs peu sensibles aux différentes perturbations électromagnétiques générées par les équipements de l'aéronef ou provenant de diverses sources de perturbations au sol.

On note que les premiers moyens de communication sans fil 5 et les deuxièmes moyens de communication sans fil 6 (pour le module électronique maître) rendent le système de surveillance selon l'invention totalement autonome en matière de communication. Aucun des modules électroniques 3 (maître ou esclave) n'est connecté au réseau avionique. De plus, aucun module électronique 3 (maître ou esclave) n'est relié par une connexion filaire à un autre module électronique 3 (ou à un autre équipement) pour communiquer avec cet autre module électronique 3 ou cet autre équipement.

Le module d'alimentation 7 comporte des moyens de stockage d'énergie comprenant des moyens de récupération d'énergie (*energy harvesting,* en anglais), une batterie (un autre moyen de stockage, tel qu'une supercapacité, pourrait aussi être utilisé), et des moyens de gestion d'énergie.

Les moyens de récupération d'énergie transforment ici les vibrations générées par le moteur 2 en énergie électrique qui est utilisée pour alimenter le module électronique 3 et pour charger la batterie. Il aurait bien sûr aussi été possible de transformer une autre source d'énergie en énergie électrique, et notamment la chaleur produite par le moteur 2 ou bien un champ électromagnétique produit par la rotation du moteur 2.

Les moyens de gestion d'énergie alimentent le module électronique 3 en utilisant l'énergie électrique stockée dans la batterie. Les moyens de récupération d'énergie sont utilisés pour charger la batterie. Les moyens de gestion d'énergie adaptent l'alimentation du module électronique 3 aux différents modes de fonctionnement qui seront évoqués plus tard dans cette description.

On note que le module d'alimentation 7 rend le module électronique 3 (maître ou esclave) totalement autonome énergétiquement. Chaque module électronique 3 n'est en particulier pas relié par une connexion filaire à une quelconque source d'énergie externe embarquée.

Les moyens de mesure 8 comprennent un capteur de température 12, un capteur d'accélération 13 et un capteur de pression 14. Le capteur de température 12 mesure la température de la nacelle 1 (à l'endroit où il est positionné), le capteur d'accélération 13 mesure les vibrations subies par la nacelle 1, et le capteur de pression 14 mesure la pression subie par la nacelle 1.

La mémoire 9 du module électronique 3 est utilisée pour enregistrer et stocker un certain nombre de données : mesures réalisées par les capteurs, résultats de traitements effectués par le système de surveillance selon l'invention, seuils de déclenchement, données d'identification, paramètres de configuration incluant des donnés de configuration de la nacelle 1, etc.

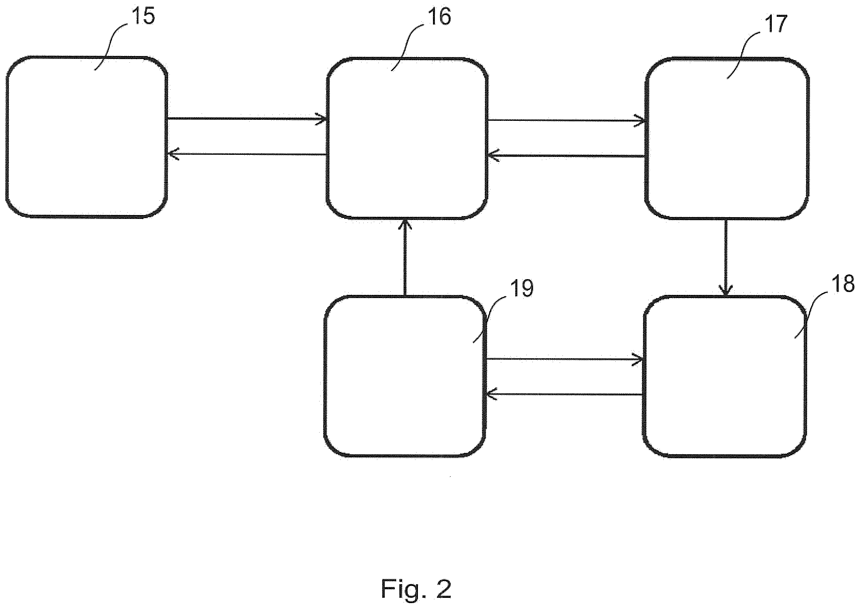

On décrit maintenant plus en détail, en référence aux figures 1 et 2, le fonctionnement du système de surveillance selon l'invention.

Le système de surveillance selon l'invention fonctionne selon cinq modes de fonctionnement : un mode de fonctionnement non opérationnel 15 et quatre modes de fonctionnement opérationnel. Les quatre modes de fonctionnement opérationnel comprennent un mode dit « mode de roulage » 16, un mode dit « mode de décollage et de montée » 17, un mode dit « mode de croisière » 18, et un mode dit « mode de descente, d'approche et d'atterrissage » 19.

Le mode de fonctionnement non opérationnel 15 est associé à une phase au cours de laquelle l'aéronef est à l'arrêt, au sol, moteurs éteints (l'aéronef est par exemple au parking dans un hangar). Par « associé à une phase », on entend que le système de surveillance selon l'invention fonctionne selon ledit mode lorsque ladite phase est détectée.

Chaque mode de fonctionnement opérationnel est associé à une ou plusieurs phases de vol de l'aéronef, pendant laquelle ou pendant lesquelles il est mis en œuvre.

Le mode de roulage 16 est associé à une phase de roulage de sortie (ou *Taxi-Out,* en anglais, qui est une phase de roulage précédant un décollage) et à une phase de roulage de rentrée (ou *Taxi-In,* en anglais, qui est une phase de roulage suivant un atterrissage).

Le mode de décollage et de montée 17 est associé à une phase de décollage (ou *Take-Off,* en anglais) et à une phase de montée (ou *Climb,* en anglais).

Le mode de croisière 18 est associé à une phase de croisière (ou *Cruise,* en anglais).

Le mode de descente, d'approche et d'atterrissage 19 est associé à une phase de descente (ou *Descent,* en anglais), à une phase d'approche (ou *Approach,* en anglais), et à une phase d'atterrissage (ou *Landing,* en anglais).

Lorsque le système de surveillance selon l'invention se trouve dans le mode de fonctionnement non opérationnel 15 (c'est-à-dire, lorsque l'aéronef est à l'arrêt, au sol, moteurs éteints), chaque module électronique esclave se trouve dans un mode de veille, dans lequel la consommation d'énergie électrique du module électronique esclave est presque nulle.

Le module électronique maître, lui, se trouve dans un mode à basse consommation d'énergie : seuls le microcontrôleur 4, le capteur de température 12 et le capteur d'accélération 13 du module électronique maître sont actifs.

Le mode de fonctionnement non opérationnel du système de surveillance selon l'invention est donc un mode à basse consommation d'énergie.

Lorsque le moteur 2 de l'aéronef démarre, la température de la nacelle 1 et les vibrations subies par la nacelle 1 augmentent. Le capteur de température 12 du module électronique maître et le capteur d'accélération 13 du module électronique maître détectent que le moteur 2 de l'aéronef vient d'être activé en mesurant la température et les vibrations subies par la nacelle 1. Le capteur de température 12 du module électronique maître et le capteur d'accélération 13 du module électronique maître détectent donc que l'aéronef est sur le point de se trouver dans la phase de roulage de sortie.

Le module électronique maître passe alors du mode à basse consommation d'énergie à un mode normal. Le module électronique maître commande les modules électroniques esclaves pour faire passer les modules électroniques esclaves du mode de veille à un mode normal. La commande des modules électroniques esclaves est réalisée via le microcontrôleur 4 du module électronique maître et les premiers moyens de communication sans fil 5 du module électronique maître (qui jouent donc le rôle de moyens de commande), et via les premiers moyens de communication sans fil 5 de chaque module électronique esclave.

Le module électronique maître synchronise les modules électroniques esclaves sur le mode de roulage 16, puisque la phase de vol suivant le démarrage du moteur 2 est la phase de roulage de sortie.

Le capteur de température 12 et le capteur d'accélération 13 du module électronique maître jouent donc le rôle de moyens de détection adaptés à détecter la phase de vol dans laquelle se trouve l'aéronef.

Le module électronique maître commande les moyens de mesure 8 des modules électroniques esclaves (à nouveau via le microcontrôleur 4 et les premiers moyens de communication sans fil 5 du module électronique maître qui jouent le rôle de moyens de commande) pour adapter à la phase de roulage de sortie les mesures effectuées par les moyens de mesure 8. En l'occurrence, le capteur de température 12 et le capteur d'accélération 13 de chaque module électronique esclave sont activés avec une fréquence d'échantillonnage d'une mesure par minute. Les mesures effectuées par le capteur de température 12 et le capteur d'accélération 13 de chaque module électronique esclave sont transmises via les premiers moyens de communication sans fil 5 au module électronique maître qui stocke ces mesures dans sa mémoire 9.

Lorsque l'aéronef décolle, les vibrations subies par la nacelle 1 augmentent. Le capteur d'accélération 13 du module électronique maître détecte que l'aéronef se trouve dans la phase de décollage.

Le module électronique maître synchronise les modules électroniques esclaves sur le mode de décollage et de montée.

Le capteur d'accélération 13 du module électronique maître joue donc le rôle de moyens de détection adaptés à détecter la phase de vol dans laquelle se trouve l'aéronef.

Le module électronique maître commande les moyens de mesure 8 du module électronique esclave via les premiers moyens de communication sans fil 5 pour adapter à la phase de décollage et à la phase de montée les mesures effectuées par les moyens de mesure 8.

En l'occurrence, le capteur de température 12 et le capteur d'accélération 13 de chaque module électronique esclave sont activés avec une fréquence d'échantillonnage de trois mesures par minute, et le capteur de pression 14 de chaque module électronique esclave est activé avec une fréquence d'échantillonnage d'une mesure par minute.

Les mesures effectuées par le capteur de température 12, le capteur d'accélération 13 et le capteur de pression 14 de chaque module électronique esclave sont transmises via les premiers moyens de communication sans fil 5 au module électronique maître qui stocke ces mesures dans sa mémoire 9.

A la fin de la montée, l'altitude de l'aéronef est élevée et la pression atmosphérique est relativement faible. Le capteur de pression 14 du module électronique maître (lui aussi activé avec une fréquence d'échantillonnage d'une mesure par minute) détecte la fin de la phase de montée et donc le début de la phase de croisière.

Le module électronique maître synchronise les modules électroniques esclaves sur le mode de croisière.

Le capteur de pression 13 du module électronique maître joue donc le rôle de moyens de détection adaptés à détecter la phase de vol dans laquelle se trouve l'aéronef.

Le module électronique maître commande les moyens de mesure 8 du module électronique esclave pour adapter à la phase de croisière les mesures effectuées par les moyens de mesure 8.

En l'occurrence, le capteur de température 12 et le capteur d'accélération 13 de chaque module électronique esclave sont activés avec une fréquence d'échantillonnage d'une mesure par minute, et le capteur de pression 14 de chaque module électronique esclave est activé avec une fréquence d'échantillonnage d'une mesure par minute. La fréquence d'échantillonnage du capteur de température 12 et la fréquence d'échantillonnage du capteur d'accélération 13 sont faibles, car la phase de croisière ne nécessite qu'une surveillance réduite. La consommation d'énergie électrique du système de surveillance selon l'invention est donc réduite.

Les mesures effectuées par le capteur de température 12, le capteur d'accélération 13 et le capteur de pression 14 de chaque module électronique esclave sont transmises via les premiers moyens de communication sans fil 5 au module électronique maître qui stocke ces mesures dans sa mémoire 9.

Suite à la fin de la phase de croisière débute la phase de descente. La phase de descente est détectée par le capteur de pression 14 du module électronique maître qui détecte une augmentation de la pression subie par la nacelle 1 et donc une baisse d'altitude de l'aéronef.

Le module électronique maître synchronise les modules électroniques esclaves sur le mode de descente, d'approche et d'atterrissage.

Le capteur de pression 14 du module électronique maître joue donc le rôle de moyens de détection adaptés à détecter la phase de vol dans laquelle se trouve l'aéronef.

Le module électronique maître commande les moyens de mesure 8 du module électronique esclave pour adapter à la phase de croisière les mesures effectuées par les moyens de mesure 8.

En l'occurrence, le capteur de température 12 et le capteur d'accélération 13 de chaque module électronique esclave sont activés avec une fréquence d'échantillonnage de trois mesures par minute, et le capteur de pression 14 de chaque module électronique esclave est activé avec une fréquence d'échantillonnage de 1kHz. La fréquence d'échantillonnage élevée du capteur de pression 14 permet de détecter efficacement des évènements de type variations brutales de pression susceptibles d'endommager la structure de la nacelle 1. De tels événements se produisent principalement au cours des phases de descente, d'approche et d'atterrissage.

Les mesures effectuées par le capteur de température 12, le capteur d'accélération 13 et le capteur de pression 14 de chaque module électronique esclave sont transmises via les premiers moyens de communication sans fil 5 au module électronique maître qui stocke ces mesures dans sa mémoire 9.

A la fin du vol, le capteur de pression 14 du module électronique maître détecte que la nacelle 1 ne subit plus les vibrations générées par le moteur 2. Le module électronique maître commande les modules électroniques esclaves pour que ceux-ci passent dans le mode de veille. Le système de surveillance selon l'invention se trouve alors à nouveau dans le mode de fonctionnement non opérationnel 15.

Lorsque le vol est terminé, l'ensemble des mesures stockées dans la mémoire 9 du module électronique maître et acquises au cours des différentes phases de vol sont transmises par le module électronique maître au terminal récepteur au sol 11 via les deuxièmes moyens de communication sans fil 6 du module électronique maître. Le module électronique maître transmet aussi au terminal récepteur au sol 11 d'autres informations stockées dans sa mémoire 9 : résultats de traitements effectués par le système de surveillance selon l'invention, données d'identification, paramètres de configuration incluant des donnés de configuration de la nacelle 1, etc.

On note que, pour optimiser la consommation électrique du système de surveillance selon l'invention, les deuxièmes moyens de communication sans fil 6 du module électronique maître qui permettent la communication vers le terminal récepteur au sol 11 ne sont activés que lorsque la phase d'atterrissage a été détectée. Dans les autres phases de vol de l'avion, la communication vers le sol n'est pas autorisée et les deuxièmes moyens de communication sans fil 6 du module électronique maître ne sont pas alimentés.

Bien entendu, l'invention n'est pas limitée au mode de réalisation décrit mais englobe toute variante entrant dans le champ de l'invention telle que définie par les revendications.

On a ici indiqué que les modules électroniques, qu'ils soient « maîtres » ou « esclaves », sont tous identiques d'un point de vue matériel. Il est bien sûr possible d'utiliser des modules électroniques maîtres et esclaves différents d'un point de vue matériel, et même des modules électroniques esclaves différents entre eux d'un point de vue matériel.

Les modules électroniques esclaves peuvent par exemple comprendre des moyens de mesure différents selon leur position sur l'équipement.

On peut par exemple prévoir que les deuxièmes moyens de communication sans fil ne soient pas montés sur les modules électroniques esclaves. On peut aussi prévoir que seuls les modules électroniques esclaves soient autonomes énergétiquement : les modules électroniques esclaves comportent alors une batterie et avantageusement des moyens de récupération d'énergie, alors que le module électronique maître est relié à une source de puissance embarquée.

On peut aussi prévoir que certains modules électroniques esclaves soient dédiés à la mesure de la température, et donc ne comportent qu'un capteur de température, que d'autres modules électroniques esclaves soient dédiés à la mesure de vibrations, et donc ne comportent qu'un capteur d'accélération, et que certains modules électroniques esclaves soient dédiés à la mesure de la pression, et donc ne comportent qu'un capteur de pression. Dans ce cas, le module électronique maître, pour un mode de fonctionnement opérationnel donné, n'active que les modules électroniques esclaves susceptibles de réaliser des mesures au cours de ce mode de fonctionnement opérationnel donné.

Les capteurs cités peuvent bien sûr être différents : on peut par exemple munir un module électronique maître ou esclave d'un capteur de vitesse, d'un capteur d'un paramètre électrique (courant, tension, etc.), d'un capteur de force, etc.

Bien que l'on ait décrit ici une architecture particulière dans laquelle la nacelle est équipée d'un capteur électronique maître et d'une pluralité de capteurs électroniques esclaves, il est possible de prévoir une architecture différente. On pourrait notamment avoir plusieurs modules électroniques maîtres pour une seule nacelle, ou bien un seul module électroniques maître pour plusieurs nacelles. Les modules électroniques (et, en particulier, le module électronique maître) ne sont pas nécessairement positionnés sur l'équipement surveillé.

Le rôle de chaque module électronique maître ou esclave dans le système de surveillance selon l'invention peut aussi être légèrement différent de celui qui a été décrit. On peut par exemple imaginer que certains modules électroniques esclaves soient utilisés pour relayer des données provenant d'autres modules électroniques esclaves à destination du module électronique maître.

Bien que l'on ait évoqué, pour les deuxièmes moyens de communication sans fil, la mise en œuvre d'une technologie de type bande étroite ou bande ultra étroite pour le réseau LPWAN, il est parfaitement possible d'utiliser une technologie différente, par exemple une technologie de type LoRa ou SigFox. Il est aussi possible d'utiliser une fréquence différente de la fréquence de 2,4GHz, et notamment une fréquence incluse dans la bande WAIC (pour *Wireless Avionics Intra-Communications,* en anglais). Les fréquences 868MHz, 915MHz ou 4,2GHz peuvent par exemple être utilisées. De même, pour les premiers moyens de communication sans fil, il est possible d'utiliser une fréquence différente de la fréquence de 2,4GHz, et notamment les fréquences 868MHz, 915MHz ou 4,2GHz.

Les fréquences d'échantillonnage peuvent elles aussi être différentes des fréquences d'échantillonnage citées dans la description.

On a décrit que le passage du mode de fonctionnement non opérationnel au mode de roulage du système de surveillance selon l'invention est commandé par le module électronique maître suite à la détection par les capteurs (température, accélération) du module électronique maître d'une élévation de température et de vibrations subie par la nacelle.

Il est alternativement possible de prévoir que le module électronique maître soit en mode de veille lorsque le système de surveillance selon l'invention se trouve dans le mode de fonctionnement non opérationnel, tout comme les modules électroniques esclaves. Le module électronique maître est alors « réveillé » par les moyens de récupération d'énergie qui récupèrent les vibrations résultant du démarrage du moteur pour produire une énergie électrique et donc une tension d'alimentation qui alimente le module électronique maître.

Enfin, le système de surveillance selon l'invention peut parfaitement être utilisé pour surveiller un équipement d'aéronef autre qu'une nacelle, par exemple un élément de la voilure ou d'un atterrisseur de l'aéronef.

## Revendications

1. Système de surveillance d'un équipement d'aéronef (1), comprenant un module électronique maître et un module électronique esclave équipés chacun de premiers moyens de communication sans fil (5) pour communiquer entre eux, le module électronique esclave comprenant en outre des moyens de mesure (8) comportant un capteur et destinés à effectuer des mesures d'un paramètre de l'équipement d'aéronef, et des moyens d'alimentation rendant le module électronique esclave autonome énergétiquement, le système étant **caractérisé en ce que** le module électronique maître comprend des moyens de détection adaptés à détecter une phase de vol dans laquelle se trouve l'aéronef, et des moyens de commande pour commander les moyens de mesure (8) du module électronique esclave via les premiers moyens de communication sans fil (5) pour adapter à la phase de vol détectée les mesures effectuées par les moyens de mesure.

2. Système de surveillance selon la revendication 1, dans lequel les moyens de mesure du module électronique esclave et/ou les moyens de détection du module électronique maître comprennent un capteur de température (12) et/ou un capteur d'accélération (13) et/ou un capteur de pression (14).

3. Système de surveillance selon la revendication 1, dans lequel l'adaptation des mesures consiste à utiliser un autre capteur pour effectuer des mesures d'un autre paramètre et/ou à modifier une fréquence d'échantillonnage du capteur.

4. Système de surveillance selon la revendication 1, le système de surveillance étant adapté à fonctionner selon un mode de fonctionnement non opérationnel à basse consommation d'énergie et un mode de fonctionnement normal en fonction de la phase de vol détectée.

5. Système de surveillance selon la revendication 4, dans lequel les moyens de commande du module électronique maître sont adaptés à commander le module électronique esclave pour le faire passer d'un mode de veille à un mode normal de manière à faire passer le système de surveillance du mode de fonctionnement non opérationnel au mode de fonctionnement opérationnel.

6. Système de surveillance selon la revendication 1, dans lequel la phase de vol détectée est une phase parmi une phase de roulage de sortie, une phase de décollage, une phase de montée, une phase de croisière, une phase de descente, une phase d'approche, une phase d'atterrissage, une phase de roulage de rentrée.

7. Système de surveillance selon la revendication 6, dans lequel les moyens de détection détectent qu'un moteur de l'aéronef vient d'être démarré et donc que l'aéronef est sur le point de se trouver dans la phase de roulage de sortie en mesurant des vibrations ou une température subie par l'équipement d'aéronef.

8. Système de surveillance selon la revendication 6, dans lequel les moyens de détection détectent que l'aéronef est dans la phase de décollage ou dans la phase d'atterrissage en mesurant des vibrations subies par l'équipement d'aéronef.

9. Système de surveillance selon la revendication 6, dans lequel les moyens de détection détectent que l'aéronef est dans une phase de croisière en mesurant une pression subie par l'équipement d'aéronef.

10. Système de surveillance selon la revendication 1, dans lequel les moyens d'alimentation du module électronique esclave comportent des moyens de récupération d'énergie.

11. Système de surveillance selon la revendication 1, dans lequel le module électronique maître comporte des deuxièmes moyens de communications sans fil (6) pour transmettre les mesures à un terminal récepteur au sol (11).

12. Système de surveillance selon la revendication 11, dans lequel les deuxièmes moyens de communications sans fil (6) sont activés uniquement après la détection d'une phase d'atterrissage.

13. Nacelle de moteur comprenant un système de surveillance selon l'une des revendications précédentes.

## Patentansprüche

1. System zur Überwachung einer Luftfahrzeugausrüstung (1), umfassend ein Master-Elektronikmodul und ein Slave-Elektronikmodul, die jeweils mit ersten drahtlosen Kommunikationsmitteln (5) ausgerüstet sind, um miteinander zu kommunizieren, wobei das Slave-Elektronikmodul ferner Messmittel (8) umfasst, die einen Sensor umfassen und dazu bestimmt sind, Messungen eines Parameters der Luftfahrzeugausrüstung durchzuführen, sowie Versorgungsmittel, die das Slave-Elektronikmodul energetisch autonom machen, wobei das System **dadurch gekennzeichnet ist, dass** das Master-Elektronikmodul Erfassungsmittel umfasst, die geeignet sind, eine Flugphase zu erfassen, in der sich das Luftfahrzeug befindet, sowie Steuermittel zum Steuern der Messmittel (8) des Slave-Elektronikmoduls über die ersten drahtlosen Kommunikationsmittel (5), um die von den Messmitteln durchgeführten Messungen an die erfasste Flugphase anzupassen.

2. System zur Überwachung nach Anspruch 1, bei dem die Messmittel des Slave-Elektronikmoduls und/oder die Erfassungsmittel des Master-Elektronikmoduls einen Temperatursensor (12) und/oder einen Beschleunigungssensor (13) und/oder einen Drucksensor (14) umfassen.

3. System zur Überwachung nach Anspruch 1, bei dem die Anpassung der Messungen darin besteht, einen anderen Sensor zu verwenden, um Messungen eines anderen Parameters durchzuführen, und/oder eine Abtastfrequenz des Sensors zu ändern.

4. System zur Überwachung nach Anspruch 1, wobei das Überwachungssystem so angepasst wird, dass es abhängig von der erfassten Flugphase in einer nicht operativen Betriebsart mit geringem Energieverbrauch und einer normalen Betriebsart arbeitet.

5. System zur Überwachung nach Anspruch 4, bei dem die Steuermittel des Master-Elektronikmoduls so angepasst werden, dass sie das Slave-Elektronikmodul steuern, um es von einem Stand-by-Modus in einen Normalmodus zu bringen, um so das Überwachungssystem von einer nicht operativen Betriebsart in die operative Betriebsart zu bringen.

6. System zur Überwachung nach Anspruch 1, bei dem die erfasste Flugphase eine Phase unter einer Abflugrollphase, einer Abflugphase, einer Steigflugphase, einer Reiseflugphase, einer Sinkflugphase, einer Anflugphase, einer Landephase, einer Ankunftsrollphase ist.

7. System zur Überwachung nach Anspruch 6, bei dem die Erfassungsmittel erfassen, dass ein Motor des Luftfahrzeugs soeben gestartet wurde und demzufolge das Luftfahrzeug gerade dabei ist, sich in der Abflugrollphase zu befinden, indem Schwingungen oder eine Temperatur gemessen werden bzw. wird, denen bzw. der die Luftfahrzeugausrüstung ausgesetzt ist.

8. System zur Überwachung nach Anspruch 6, bei dem die Erfassungsmittel erfassen, ob das Luftfahrzeug in der Abflugphase oder in der Landephase ist, indem Schwingungen gemessen werden, denen die Luftfahrzeugausrüstung ausgesetzt ist.

9. System zur Überwachung nach Anspruch 6, bei dem die Erfassungsmittel erfassen, ob das Luftfahrzeug in einer Reiseflugphase ist, indem ein Druck gemessen wird, dem die Luftfahrzeugausrüstung ausgesetzt ist.

10. System zur Überwachung nach Anspruch 1, bei dem die Versorgungsmittel des Slave-Elektronikmoduls Mittel zur Energierückgewinnung umfassen.

11. System zur Überwachung nach Anspruch 1, bei dem das Master-Elektronikmodul zweite drahtlose Kommunikationsmittel (6) umfasst, um die Messungen an einen Empfangsterminal (11) am Boden zu übertragen.

12. System zur Überwachung nach Anspruch 11, bei dem die zweiten drahtlosen Kommunikationsmittel (6) nur nach Erfassung einer Landephase aktiviert werden.

13. Motorgondel, umfassend ein System zur Überwachung nach einem der vorhergehenden Ansprüche.

## Claims

1. A monitoring system for monitoring a piece of aircraft equipment (1), the system comprising a master electronic module and a slave electronic module, each fitted with first wireless communication means (5) for communicating with each other, the slave electronic module further comprising measurement means (8) including a sensor for the purpose of taking measurements of a parameter of the aircraft equipment, and power supply means making the slave electronic module independent in terms of energy, the system being **characterized in that** the master electronic module further comprises detector means adapted to detect a stage of flight in which the aircraft is to be found, and control means for acting via the first wireless communication means (5) to control the measurement means (8) of the slave electronic module so as to adapt the measurements taken by the measurement means to the detected stage of flight.

2. A monitoring system according to claim 1, wherein the measurement means of the slave electronic module and/or the detector means of the master electronic module comprise a temperature sensor (12) and/or an acceleration sensor (13) and/or a pressure sensor (14).

3. A monitoring system according to claim 1, wherein adapting these measurements consists in using another sensor in order to take measurements of another parameter and/or in modifying a sampling frequency of the sensor.

4. A monitoring system according to claim 1, the monitoring system being adapted to operate in a low energy consumption, non-operational mode of operation and in a normal mode of operation, as a function of the stage of flight that is detected.

5. A monitoring system according to claim 4, wherein the control means of the master electronic module are adapted to control the slave electronic module to switch from a standby mode to a normal mode so as to cause the monitoring system to switch from the non-operational mode of operation to the operational mode of operation.

6. A monitoring system according to claim 1, wherein the stage of flight that is detected is a stage from: a taxi-out stage; a takeoff stage; a climb stage; a cruise stage; a descent stage; an approach stage; a landing stage; and a taxi-in stage.

7. A monitoring system according to claim 6, wherein the detector means detect that an engine of the aircraft has just been started and thus that the aircraft is about to be in a taxi-out stage, by measuring the vibration or the temperature to which the aircraft equipment is being subjected.

8. A monitoring system according to claim 6, wherein the detector means detect that the aircraft is in the takeoff stage or in the landing stage by measuring vibration to which the aircraft equipment is being subjected.

9. A monitoring system according to claim 6, wherein the detector means detect that the aircraft is in a cruise stage by measuring the pressure to which the aircraft equipment is being subjected.

10. A monitoring system according to claim 1, wherein the power supply means of the slave electronic module include energy harvesting means.

11. A monitoring system according to claim 1, wherein the master electronic module includes second wireless communication means (6) for transmitting the measurements to a receiver terminal (11) on the ground.

12. A monitoring system according to claim 11, wherein the second wireless communication means (6) are activated only after detecting a stage of landing.

13. An engine nacelle including a monitoring system according to any preceding claim.
